# EUROPÄISCHE PATENTSCHRIFT

(11) **EP 0 249 808 B1**
(45) Veröffentlichungstag und Bekanntmachung des Hinweises auf die Patenterteilung: **17.03.1993**
(21) Anmeldenummer: 87108034.7
(22) Anmeldetag: 03.06.1987
(51) Int. Cl.: H02K 7/14

(54) **Kraftfahrzeug-Elektroantrieb**
Drive unit for an electrically powered vehicle
Transmission électrique pour véhicule automobile

(30) Priorität: 18.06.1986 DE 3620335
(43) Veröffentlichungstag der Anmeldung: 23.12.1987
(73) Patentinhaber: Magnet-Motor Gesellschaft für magnetmotorische Technik mbH, D-82319 Starnberg (DE)
(72) Erfinder: Heidelberg,Goetz,Dipl.Phys., D-8136 Percha (DE)
(74) Vertreter: Klunker . Schmitt-Nilson . Hirsch

(56) Entgegenhaltungen:
- CH-A- 238 772
- DE-A- 1 959 588
- FR-A- 469 666
- US-A- 2 244 875
- US-A- 2 514 460
- US-A- 3 347 333

## Beschreibung

Die Erfindung betrifft einen Elektroantrieb für Kraftfahrzeuge, der mindestens einen Radantriebs-Elektromotor mit einem Stator und einem Rotor aufweist und bei dem der Rotor des Elektromotors mit dem anzutreibenden Kraftfahrzeugrad über ein Ritzel-Hohlrad-Getriebe verbunden ist, das mindestens im wesentlichen innerhalb der Felge des Kraftfahrzeugrades untergebracht ist.

Elektrische Antriebe für Kraftfahrzeuge sind in verschiedensten Formen seit langer Zeit bekannt. Allerdings sind bislang konkrete Konstruktionen und deren Einsatz in der Praxis relativ selten geblieben.

Ein Elektroantrieb der obengenannten Art ist aus der CH-A-238 772 bekannt. Bei diesem bekannten Elektroantrieb ist die Drehachse des RadantriebsElektromotors starr mit dem Ritzel des Ritzel-Hohlrad-Getriebes gekoppelt. Der Elektromotor selbst ist in üblicher Weise mit außenliegendem Stator und Innenläufer ausgebildet. Zur stabilen Lagerung des Rotors und der an einem Ende das Ritzel tragenden Rotorwelle ist auf der dem anzutreibenden Rad abgewandten Seite der Welle ebenfalls noch ein Lager angeordnet. Die gesamte Anordnung nimmt praktisch die gesamte Hälfte des Raumes zwischen zwei Rädern einer Achse des Fahrzeugs ein, beide Elektromotoren belegen also praktisch den gesamten Platz zwischen den beiden Rädern.

Aus der FR-A-469 666 ist eine Verbindung zwischen einer Antriebswelle und einem anzutreibenden Fahrzeugrad bekannt, bei der eine Gelenkwelle eingesetzt wird. Der Einsatz einer Gelenkwelle ist auch aus der US-A-3 347 333 für den Antrieb zwischen einem Rad eines Kraftfahrzeugs und einem für den Antrieb vorgesehenen Elektromotor bekannt. Der Elektromotor ist in üblicher Weise mit Außenstator und Innenrotor ausgebildet. Die Gelenkwelle soll Relativbewegungen zwischen dem Rad und dem Motor während der Fahrt ausgleichen.

Es ist Aufgabe der Erfindung, einen Elektroantrieb für Kraftfahrzeuge der eingangs genannten Art anzugeben, der bei kompakter Bauweise eine in der Praxis relativ leicht zu realisierende Art der Drehmomentübertragung von dem Elektromotor zu dem Kraftfahrzeugrad ermöglicht.

Die Lösung dieser Aufgabe ist im Anspruch 1 angegeben.

Die Erfindung zeigt einen Weg auf, das für den Antrieb des Kraftfahrzeugs am jeweiligen Antriebsrad erforderliche Drehmoment mit geringem Aufwand direkt am Antriebsrad aufzubauen. Um überhaupt für die mindestens im wesentlichen innerhalb der Felge des Kraftfahrzeugrads untergebrachte Getriebestufe ausreichenden Raum zur Verfügung zu haben, muß in der Regel die bei herkömmlichen Kraftfahrzeugen dort untergebrachte Bremstrommel oder Bremsscheibe dort entfallen und entweder an anderer Stelle vorgesehen oder - abgesehen von der auf jeden Fall vorzusehenden Feststellbremse - durch das Vorsehen des Elektromotors zugleich als Motorbremse ersetzt werden.

Der Elektroantrieb weist vorzugsweise pro anzutreibendes Kraftfahrzeugrad einen Elektromotor auf, also häufig zwei Elektromotoren für die beiden Räder der Antriebsachse oder, im Fall des Vierradantriebs, vier Elektromotoren für vier Kraftfahrzeugräder.

Die Erfindung ist bei Kraftfahrzeugrädern mit den bei Personenkraftwagen für Straßenverkehr üblichen Abmessungen realisierbar. Insbesondere für größere Kraftfahrzeugräder, wie die Räder von Lastkraftwagen, Omnibussen oder dergleichen, kommt die Erfindung in Betracht, bei der auch der Elektromotor innerhalb der Felge des anzutreibenden Kraftfahrzeugrads untergebracht ist. Hierbei kann man den Rotor des Elektromotors besonders platzsparend auf einem Getriebestufenbauteil lagern.

Im Zusammenhang mit der Ritzel-Hohlrad-Getriebestufe ist hervorzuheben, daß sich die Ritzelachse ein Stück oberhalb der Kraftfahrzeugachse anordnen läßt, so daß der Elektromotor bei ansonsten gleichbleibender Drehmomentverbindung zu dem Fahrzeugrad mit seiner Drehachse ein Stück höher kommt. Dies macht es möglich, einen - auch im Durchmesser großen - Elektromotor ohne unzuträgliche Einschränkungen der Bodenfreiheit des Kraftfahrzeugs vorzusehen.

Wenn für jedes anzutreibende Rad ein Elektromotor vorgesehen ist, erübrigt sich ein Differential. Man kann die üblicherweise in einem Differential zugleich vorgenommene Untersetzung in das Fahrzeugrad verlagern.

Die Erfindung und Weiterbildungen der Erfindung werden im folgenden anhand eines Ausführungsbeispiels näher erläutert.

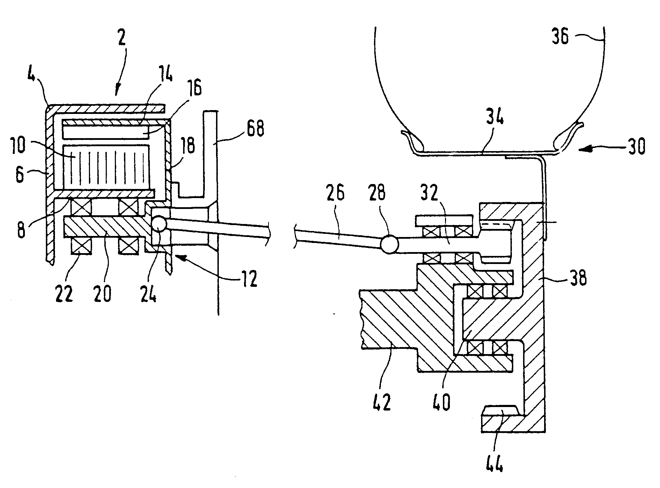

Die einzige Figur zeigt einen Radantriebs-Elektromotor und ein zugeordnetes, anzutreibendes Kraftfahrzeugrad, jeweils teilweise und im Schnitte.

Der in der Figur links dargestellte Elektromotor 2 ist ein sogenannter Außenläufermotor. Der Elektromotor 2 weist ein an einer Stirnseite offenes, insgesamt im wesentlichen topfförmiges Gehäuse 4 auf, das an geeigneter Stelle am Kraftfahrzeug befestigt ist. Von der geschlossenen Stirnseite 6 aus erstreckt sich ein hohlzylindrischer Stutzen 8 in Axialrichtung zum Motorinneren. Dieser Stutzen 8 trägt an seinem Außenumfang einen insgesamt hohlzylindrischen Stator 10, der mit nicht gezeichneten Wicklungen versehen ist. Der Rotor 12 des Elektromotors 2 ist ebenfalls im wesentlichen topfförmig mit einer offenen Stirnseite. Innen an der Umfangswand 14 des Rotors 12 sind in Umfangsrichtung verteilt Dauermagnete 16 in abwechselnder Polung angeordnet. Von der geschlossenen Axialseite 18 des Rotors 12 aus erstreckt sich in Axialrichtung ein Fortsatz 20 in das Motorinnere. Dieser Fortsatz ist zylindrisch und mittels Wälzlagern 22 in dem Stutzen 8 gelagert. Elektromotoren mit diesem grundsätzlichen Aufbau sind an sich bekannt, so daß hier die Konstruktion nicht noch detaillierter beschrieben werden muß.

In ihrem Zentrum ist die geschlossene Stirnseite 18 des Rotors 12 zurückgenommen, und dort ist das nur schematisch als Kreis gezeichnete, erste Gelenk 24 einer Gelenkwelle 26 angeordnet. Das zweite, ebenso schematisch dargestellte Gelenk 28 der Gelenkwelle 26 befindet sich am Ende einer im Inneren des Rades 30 angeordneten, kurzen Welle 32.

Das Rad 30 besteht im wesentlichen aus einer Felge 34, die herkömmliche Gestalt haben kann, einem Reifen 36 und einem zylindrischen, zum Elektromotor 2 hin einseitig offen-topfförmigen Zentralteil 38, das weitgehend die Gestalt einer herkömmlichen Bremstrommel hat. Allerdings ragt bei diesem Zentralteil 38 zentrisch ein Fortsatz 40 in Richtung auf den Elektromotor 2 zu, der der Lagerung des Zentralteil 38 in dem mit einer entsprechenden Sackbohrung versehenen, stationären Radträger 42 dient. Ferner ist die Umfangswand des Zentralteils 38 am Innenumfang mit einer Verzahnung 44 versehen.

Mit dieser Verzahnung 44 kämmt eine Verzahnung am äußeren Ende der Ritzelwelle 32, so daß auf diese Weise ein Ritzel-Hohlrad-Getriebe gebildet ist. Die Ritzelwelle 32 ist in einem nach oben ragenden Vorsprung des Radträgers 42 gelagert. Das genannte Getriebe ist also sowohl axial als auch radial vollständig im Inneren der Felge 34 untergebracht. Die schnelldrehende Gelenkwelle 26 kann dünn und mit weniger kräftig dimensionierten Gelenken 24, 28 gestaltet sein.

Es sei betont, daß bei der Erfindung bevorzugt Elektromotoren zum Einsatz kommen, die synchron arbeiten und/oder mit Dauermagneten ausgestattet sind und/oder mit elektronischer Umschaltung der Wicklungen arbeiten und einen Außenrotor auweisen.

Eine Bremsscheibe 68 oder analog eine Bremstrommel kann koaxial zum Rotor 12 starr mit diesem verbunden vorgesehen sein.

Man kann auch das innere Gelenk 24 der Gelenkwelle 26 weglassen und stattdessen den Elektromotor 2 kippbeweglich lagern, so daß er beim Ein- und Ausfedern des Kraftfahrzeugs den Schwenkbewegungen der Gelenkwelle 26 folgt.

## Patentansprüche

1. Elektroantrieb für Kraftfahrzeuge, der mindestens einen Radantriebs-Elektromotor (2) mit einem Stator (10) und einem Rotor (12) aufweist und bei dem der Rotor (12) des Elektromotors (2) mit dem anzutreibenden Kraftfahrzeugrad (30) über ein Ritzel-Hohlrad-Getriebe (32, 44) verbunden ist, das mindestens im wesentlichen innerhalb der Felge (34) des Kraftfahrzeugrades (30) untergebracht ist,
dadurch gekennzeichnet, daß der Elektromotor (2) als Außenläufermotor ausgebildet ist, dessen Rotor (12) eine dem anzutreibenden Kraftfahrzeugrad (30) zugewandte Stirnwand (18) aufweist und mittels eines zentralen Fortsatzes (20) im Inneren des hohlen Stators (10) gelagert ist; und daß der Rotor (12) des Elektromotors (2) über eine Gelenkwelle (26) mit dem Ritzel (32) des Ritzel-Hohlrad-Getriebes (32, 44) verbunden ist.

2. Elektroantrieb nach Anspruch 1,
dadurch gekennzeichnet, daß pro anzutreibendes Kraftfahrzeugrad (30) ein eigener Elektromotor (2) ohne Zwischenschaltung eines Differentialgetriebes vorgesehen ist.

## Claims

1. An electric drive for motor vehicles, comprising at least one wheel driving electric motor (2) having a stator (10) aid a rotor (12), the rotor (12) of said electric motor (2) being connected to the vehicle wheel (30) to be driven via a pinion/ring gear transmission (32, 44) accommodated at least substantially within the rim (34) of the vehicle wheel (30),
characterized in that the electric motor (2) is constructed as an external rotor motor whose rotor (12) has a face wall (18) facing the vehicle wheel (30) to be driven and is supported in the interior of the hollow stator (10) by means of a central extension (20); and in that the rotor (12) of the electric motor (2) is connected via a jointed shaft (26) to the pinion (32) of the pinion/ring gear transmission (32, 44).

2. An electric drive according to claim 1,
characterized in that a separate electric motor (2) is provided for each vehicle wheel (30) to be driven, without a differential gear being interposed therebetween.

## Revendications

1. Dispositif d'entraînement électrique pour véhicule automobile comportant au moins un moteur électrique d'entraînement de roue (2) avec un stator (10) et un rotor (12) et dans lequel le rotor (12) du moteur électrique (2) est relié à la roue du véhicule (30) à entraîner, par une transmission à pignon et roue creuse (32, 44) laquelle est logée au moins en grande partie à l'intérieur de la jante (34) de la roue (30) du véhicule, caractérisé en ce que le moteur électrique (2) est un moteur à induit extérieur dont le rotor (12) comporte une paroi frontale tournée vers la roue (30) à entraîner et est monté, au moyen d'un prolongement central (20), à l'intérieur du stator (10) creux et en ce que le rotor (12) du moteur électrique (2) est relié, par un arbre articulé (26), avec le pignon (32) de la transmission à pignon et roue creuse (32, 44).

2. Dispositif d'entraînement électrique selon la revendication 1, caractérisé en ce qu'il est prévu par roue (30) à entraîner, un moteur électrique (2) sans interposition d'un mécanisme différentiel.
